(19) Europäisches Patentamt
European Patent Office
Office européen des brevets

(11) **EP 2 562 722 B1**

## (12) EUROPEAN PATENT SPECIFICATION

(45) Date of publication and mention
of the grant of the patent:
**10.07.2019 Bulletin 2019/28**

(51) Int Cl.:
***G06T 15/00*** (2011.01)      ***G06T 15/04*** (2011.01)
***G06T 15/20*** (2011.01)

(21) Application number: **11178724.8**

(22) Date of filing: **24.08.2011**

(54) **Method and system for scene visualization**

Verfahren und System zu Szenenansicht

Système et procédé pour la visualisation de scènes

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.02.2013 Bulletin 2013/09**

(73) Proprietor: **Karlsruher Institut für Technologie
76131 Karlsruhe (DE)**

(72) Inventors:
- **Heuveline, Vincent
  76297 Stutensee-Blankenloch (DE)**
- **Baumann, Martin
  68794 Oberhausen-Rheinhausen (DE)**
- **Ritterbusch, Sebastian
  76131 Karlsruhe (DE)**
- **Reiner, Roman
  76131 Karlsruhe (DE)**

(74) Representative: **Bittner, Peter
  Georg-Meier-Str. 86
  68766 Hockenheim (DE)**

(56) References cited:
**US-A1- 2005 110 789**

- **NOGUERA J M ET AL: "Navigating large terrains using commodity mobile devices", COMPUTERS AND GEOSCIENCES SEPTEMBER 2011 ELSEVIER LTD GBR, vol. 37, no. 9, 9 November 2010 (2010-11-09), pages 1218-1233, XP002669383, DOI: DOI:10.1016/J.CAGEO.2010.08.007**
- **SCHAUFLER G: "Per-object image warping with layered impostors", RENDERING TECHNIQUES '98. PROCEEDINGS OF THE EUROGRAPHICS WORKSHOP SPRINGER-VERLAG/WIEN WIEN, AUSTRIA, 1998, pages 145-156, XP002669384, ISBN: 3-211-83213-0**
- **JESCHKE S ET AL: "LAYERED ENVIRONMENT-MAP IMPOSTORS FOR ARBITRARY SCENES", PROCEEDINGS GRAPHICS INTERFACE 2002. CALGARY, ALBERTA, CANADA, MAY 27 20020527 TORONTO : CIPS, US, vol. CONF. 28, 27 May 2002 (2002-05-27), pages 1-08, XP001232451, ISBN: 978-1-56881-183-3**
- **SHADE J ET AL: "HIERARCHICAL IMAGE CACHING FOR ACCELERATED WALKTHROUGHS OF COMPLEX ENVIRONMENTS", COMPUTER GRAPHICS PROCEEDINGS 1996 (SIGGRAPH). NEW ORLEANS, AUG. 4 - 9, 1996; [COMPUTER GRAPHICS PROCEEDINGS (SIGGRAPH)], NEW YORK, NY : ACM, US, 4 August 1996 (1996-08-04), pages 75-82, XP000682723,**
- **Alan Watt: "3D Computer Graphics, Third Edition", 2000, Addison-Wesley, London, XP002669385, * page 443 - page 462 ***
- **PARAVATI G ET AL: "An Adaptive Control System to Deliver Interactive Virtual Environment Content to Handheld Devices", MOBILE NETWORKS AND APPLICATIONS KLUWER ACADEMIC PUBLISHERS NETHERLANDS, vol. 16, no. 3, June 2011 (2011-06), pages 385-393, XP002669386, ISSN: 1383-469X**

- ALIAGA D ET AL: "MMR: AN INTERACTIVE MASSIVE MODEL RENDERING SYSTEM USING GEOMETRIC AND IMAGE-BASED ACCELERATION", PROCEEDINGS OF THE 1999 SYMPOSIUM ON INTERACTIVE 3D GRAPHICS. ATLANTA, GA, APRIL 26 - 28, 1999; [PROCEEDINGS OF THE SYMPOSIUM ON INTERACTIVE 3D GRAPHICS], NEW YORK, NY : ACM, US, 26 April 1999 (1999-04-26), pages 199-206,237, XP001032569, ISBN: 978-1-58113-082-9
- ALIAGA D G ET AL: "Sea of images: A dense sampling approach for rendering large indoor environments", IEEE COMPUTER GRAPHICS AND APPLICATIONS, IEEE SERVICE CENTER, NEW YORK, NY, US, vol. 23, no. 6, 1 November 2003 (2003-11-01), pages 22-30, XP011103122, ISSN: 0272-1716, DOI: 10.1109/MCG.2003.1242379
- JERRY CHEN ET AL: "Interactive, Internet Delivery of Visualization via Structured Prerendered Multiresolution Imagery", IEEE TRANSACTIONS ON VISUALIZATION AND COMPUTER GRAPHICS, IEEE SERVICE CENTER, LOS ALAMITOS, CA, US, vol. 14, no. 2, 1 March 2008 (2008-03-01), pages 302-312, XP011344463, ISSN: 1077-2626, DOI: 10.1109/TVCG.2007.70428

**Description**

**Technical Field**

The present invention generally relates to electronic data processing, and more particularly, relates to methods, computer program products and systems for scene visualization.

**Background**

Visualizations of, for example, numerical simulations, industrial designs, medical tomography or virtual reality are based on large data sets representing three-dimensional scenes that even may be unbounded. They are created on computers with appropriate visualization software using specialized graphics hardware. In many applications data need to be explored and viewed from various viewpoints in an interactive way. In general the amount and complexity of visualization data is rising and the computational demands for such systems are increasing. Because of an increasingly mobile society such visualization needs appear more and more for mobile devices, such as thin clients, smartphone or tablets.

Image-based rendering techniques are widely used to reduce the geometric complexity of virtual environments. This is done by replacing parts of a scene with a textured representation approximating the original geometry of the virtual environment. Such representation can be a polygon with four sides and four vertices or corners, a so called textured quadrilateral.

A textured representation can be generated for a specific position and viewing direction, a so called viewport. Because the textured representation has a significantly simplified geometry compared to the original virtual environment, parallax errors can occur on rendering the approximation. These display errors are described by measuring the visual difference to the (hypothetically rendered) original, for example by measuring the maximum angle between a point and its representation. A viewport is said to be valid as long as the visual difference is below a certain threshold.

A problem using layered textured representation, especially when approximating large objects, is that different parts of continuous surfaces happen to end up on different layers which can make them tear up when viewed from a different angle. Depending on the complexity of the approximation, a textured representation is either easy to generate but only valid inside a small region and thus needs to be updated very often, or it is valid inside a large domain but complex and difficult to generate and display. Since the former strains bandwidth and the latter strains render speed, any image-based rendering approach is usually a trade-off between the available capacities.

J. Noguera et al: "Navigating large terrains using commodity mobile devices", Computers and Geosciences, September 2011, discloses a hybrid cilent-server technique for remote adaptive streaming and rendering of large terrains, wherein the terrain area close to the viewer is rendered by the client in real time, and the terrain located far from the viewer is rendered by the server as impostors to be projected on the inner faces of a cube surrounding the viewer position.

S. Jeschke et.al: "Layered Environment-Map Impostors for Arbitrary Scenes", Graphics Interface Proceedings 2002, discloses an approach for accelerating the rendering of complex scenes using layered impostors. The scene is partitioned into viewing regions, and a layered impostor representation is precalculated for each of them. Geometry close to the view point is not represented by the impostors but rendered at runtime.

**Summary**

Therefore, there is a need to improve the rendering (creation and display) of complex three dimensional scenes on client devices, especially on thin clients, such as smartphones or tablet PCs, having usually constrained capacities, such as limited bandwidth, memory and processing power.

The problem is solved by an aspect of the invention according to claim 1, where two-dimensional image layers are used as textured representations of a three dimensional scene.

A computer implemented method for scene visualization according to claim 1 includes: sending from a client a visualization description of a three-dimensional scene to at least one server, wherein the visualization description comprises position and orientation parameters of the three-dimensional scene, and the position parameters indicate a view position and the orientation parameters indicate a view orientation in respect of the three-dimensional scene; receiving at the client from the at least one server at least one series of two-dimensional image layers according to the visualization description, wherein each two-dimensional image layer is a representation of a corresponding spatial portion of the three-dimensional scene, the at least one series corresponding to the position and orientation parameters, and wherein a front layer of the series includes a projection of objects closest to the view position and a back layer of the series includes a projection of the farest objects; calculating at the client the three-dimensional scene by composing the two-dimensional image layers of the at least one series and, if required, by adjusting the two-dimensional image layers to a specific position and orientation; and displaying the calculated three-dimensional scene at the client. Position and orientation parameters of the three-dimensional scene will also be referred to as viewport or visualization description hereinafter.

This method allows enabling client computers, especially thin clients with small network bandwidth, to display interactive visualizations of large three-dimensional data sets. Because these sets are too complex to be stored in device memory, the scene is rendered in parts on a server and the client approximates the scene on the device with the use of two-dimensional image layers. This approach, on the one hand, enables parallelization on the server side. On the other hand, approximating the scene with two-dimensional image layers allows changing the viewport without the need of receiving new data for every change in position. Instead, a two-dimensional image layer only needs to be updated when it becomes invalid, for example, if the viewport change is too large for the current two-dimensional image layers to act as a sufficing approximation for the respective objects.

Further aspects of the invention are a computer program product according to the independent claim 10, a client computer according to independent claim 11, and a computer system according to claim 15. The client can run the computer program to execute the method of claim 1.

Alternative embodiments of the invention can be implemented by including a pre-fetching method for anticipating the movement of an observer. This alternative embodiment according to claim 3 further includes: receiving position change information at the client; predicting future change information on the basis of the received change information; determining a further visualization description corresponding to the predicted future change information; and pre-fetching at least a further series of two-dimensional image layers for the further visualization description by repeating the sending, receiving and calculating steps for the further visualization description. The received position change information may also include information from external knowledge sources, such as for example, the knowledge of a map where a certain building is located. The predicting, determining and pre-fetching steps can be implemented at the client or may at least partly be executed by the at least one server.

Rather than depleting bandwidth by constantly loading the optimal set of two-dimensional image layers for the current viewport, this aspect of the invention allows hiding network latency by pre-fetching data sets for viewports which are likely to be needed later on. The assumed future observer movement can be modeled as a probability distribution, which is then used to minimize the expected error caused by the movement by finding an optimal set of data sets (two-dimensional image layers) for pre-fetching.

Further aspects of the invention will be realized and attained by means of the elements and combinations particularly pointed out in the appended claims. For example, it may be advantageous when the visualization description further comprises at least one client capability parameter and wherein the spatial portions being adapted to the at least one client capability parameter as pointed out in claim 2. It is to be understood that both, the foregoing general description and the following detailed description are exemplary and explanatory only and are not restrictive of the invention as described.

## Brief Description of the Drawings

FIG. 1 shows a computer system according to one embodiment of the invention;
FIG. 2 illustrates a visualization description corresponding to a viewport as used by an embodiment of the invention;
FIG. 3 is a flow chart diagram of a computer implemented method according to one embodiment of the invention;
FIG. 4 illustrates generation of a two-dimensional image layer;
FIG. 5 shows a series of two-dimensional image layers and respective spatial portions of a three-dimensional scene;
FIG. 6 shows a hyperbolic graph for optimizing the determining of the spatial portions;
FIG. 7 is a flow chart diagram continuing the computer implemented method according to an optional embodiment of the invention; and
FIG. 8 is a comparison of an initial scene and an optimized scene.

## Detailed Description

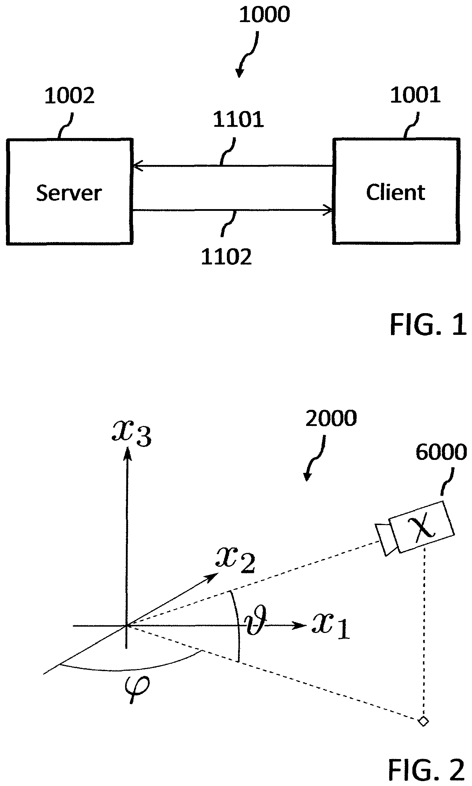

FIG. 1 shows a computer system 1000 according to one embodiment of the invention that includes at least one client computer 1001 and one server computer 1002. The client 1001 and the server 1002 are communicatively coupled trough a communication network. The communication network can be of high bandwidth but also low bandwidth networks, such as GSM networks, may be used.

For example, the client computer 1001 can be a personal computer or a thin client, which is a constrained device like a smart phone or a tablet PC. Constrained devices can have limitations like memory constraints, processing power constraints or bandwidth constraints. The client 1001 has display means, which is appropriate to display a three dimensional scene. For example, such display means can be a LCD display or be made of any other commercially available display technology. Further the client may have a processor which is capable to generate display graphics with sufficient resolution for visualizing three-dimensional scenes on the display means. For example, the client can display a virtual environment corresponding to a three-dimensional scene of a street where the client currently is.

The client can be equipped with sensors to sense the current position of the client and a view direction for the client. For example, the current position can be determined by using a Global Positioning System (GPS) sensor or by using a triangulation method based on the field strength received by different base stations of a cell phone network. The view direction can be described through orientation parameters which, for example, may be sensed by a compass and gravitational sensors integrated in the client.

If a user of the client wants to see a virtual three-dimensional scene, which corresponds to the user's current viewport (position and orientation), the client can send a request 1101 for the corresponding data to a server 1002, where the data of the virtual environment is stored. The client may include a visualization description in the request 1101 to inform the server about the current position and the respective orientation parameters for specifying expected scene visualization data.

The server 1002 may generate a series of two-dimensional image layers according to the position and orientation parameters of the visualization description. The two-dimensional image layers are representations of spatial portions of the three-dimensional scene. That is, each two-dimensional image layer corresponds to a planar projection of all objects in the respective spatial portion of the three-dimensional space of the scene. In other words, the three dimensional space is cut into slices, wherein each slice corresponds to a two-dimensional image layer and the objects in the three-dimensional space around each slice are projected onto the corresponding image layer. Thereby the whole three-dimensional space, which corresponds to the scene, can be divided into spatial portions, which are compressed into a limited number of two-dimensional image layers. For example, a front layer of the plurality of image layers of the series is the layer closest to the view position of the client's user and a back layer is the layer with the farest distance from the view position. It is to be noted that a two-dimensional image layer can correspond to an infinite band representing an infinite spatial portion of the scene but it is also possible to use a plurality of smaller, finite two-dimensional areas instead of infinite bands to represent finite portions of the scene. Those finite areas may even be slightly shifted in relation to neighboring areas. Even an unstructured partitioning of the scene can be used to generate the corresponding two-dimensional image layers. Such generation techniques are described in more detail for example in Mäntylä, M. (1988), An introduction to solid modeling, Rockville, Maryland: Computer Science Pr.

The number of image layers between the front and the back layer may be predefined or may be determined based on a client capability parameter, which can be included in the request 1101 or which can be dynamically determined. For example, the client capability parameter can relate to client hardware constraints, connection properties of the connection between the client and the server or to client user behavior or any combination thereof. The server 1002 then can determine the number of two dimensional image layers, which is appropriate for the requesting client and generates the corresponding image layers for the respective spatial portions. Alternatively, the client itself can provide the numbers of requested image layers to the server. The server generates the series of two-dimensional image layers according to the visualization description. The series of generated image layers for the requested scene visualization is then sent as a response 1102 to the client 1001. The server 1002 may also send further series of two-dimensional image layers which are associated with further viewports being close to the visualization description.

The client calculates the three dimensional scene by composing the two-dimensional image layers of the received series. In case the series of image layers received with the response 1102 does not exactly correspond to the current viewport the client can adjust the two-dimensional image layers to the current position by shifting or rotating the two-dimensional image layers accordingly before finally displaying the scene for on its display means to the user. Details of the corresponding translations and rotations are described under FIG. 2.

FIG. 2 illustrates the visualization description 2000 corresponding to a viewport 6000. Mathematical concepts and methods, such as homogenous coordinates and projective transformations are well established and can be found in most books on the topic of geometry. An example of such a reference book is Projective Geometry: Form Foundations to Applications by Albrecht Beutelspacher and Ute Rosenbaum.

Establishing a model requires a mathematical model describing viewports and projections thereon, with which rendering and approximation processes can be modeled. This yields an error function describing the error of a single point, which can be expanded to an error function describing a certain average error on a whole set of points. Both these errors are defined as functions of the observer movement. Then, building the observer movement as a probability distribution, one can describe the expected value of the error. This interaction error corresponds to a cost function, which can be optimized.

Any viewport orientation can be described with five values $(c_1, c_2, c_3, \vartheta, \varphi)^\top =: c \in \mathbb{R}^3 \times [-\pi/2, \pi/2] \times [-\pi, \pi]$, defining an affine transformation $\chi_c$, which is the combination of a translation followed by two rotations

$$\chi_c = \varrho_{e2,\varphi} \circ \varrho_{e1,\vartheta} \circ \tau_{c1,c2,c3}.$$

The coordinate system in FIG. 2 is defined by the three dimensional orthogonal axis $x_1$, $x_2$, $x_3$. The five values are also referred to as the visualization description including the position and orientation parameters of the three dimensional scene. The coordinates $c_1$, $c_2$, $c_3$ of the viewport 6000 represent the position parameters in the three dimensional coordinates system. The orientation parameters are

defined by the angles $\vartheta$ and $\varphi$, where $\vartheta$ is the orientation angle in respect to the plane defined by the $x_1$, $x_2$ dimensions and $\varphi$ is the orientation angle within the $x_1$, $x_2$-plane in relation to the $x_2$ axis.

When describing viewports, one can use the transformation $\chi_c$ and the vector c interchangeably, that is, the viewport $\chi_c$ is the same as the viewport c. In particular, one can identify sets of viewports with subsets of $\mathbb{R}^5$. However, this parameterization does not imply c = a - b when $\chi_c = \chi_a \circ \chi_b$ or anything similar.

Since the translation precedes the rotations, $c_1$, $c_2$, $c_3$ represent a translation in viewport space, that is, increasing $c_1$ will always move the viewport to the right from its own point of view, regardless of its actual orientation. $\vartheta$ is the angle between the $x_1$, $x_2$-plane and the viewing direction, and $\varphi$ is the angle between the $x_3$-axis and the projection of the viewing direction onto the $x_1$, $x_2$-plane. This means the default viewport $\chi_c$ = Id is located in the origin, looking into the

$$Q_c = \left( \begin{array}{c|c} B_{\vartheta,\varphi} & B_{\vartheta,\varphi} c \\ \hline 0 & 1 \end{array} \right)$$

positive $x_3$-direction. Matrix representations $Q_c$, $Q_c^{-1}$ of $\chi_c$ and its inverse, respectively, are

$$Q_c^{-1} = \left( \begin{array}{c|c} B_{\vartheta,\varphi}^\top & -c \\ \hline 0 & 1 \end{array} \right)$$ and where

$$B_{\vartheta,\varphi} := \left( \begin{array}{ccc} \cos\varphi & -\sin\varphi\sin\vartheta & -\sin\varphi\cos\vartheta \\ 0 & \cos\vartheta & -\sin\vartheta \\ \sin\varphi & \cos\varphi\sin\vartheta & \cos\varphi\cos\vartheta \end{array} \right).$$

Definition 1.1.: The set

$$X := \left\{ (c_1, c_2, c_3, \vartheta, \varphi)^\top \mid c_1, c_2, c_3 \in \mathbb{R}, \vartheta \in [-\pi/2, \pi/2], \varphi \in [-\pi, \pi] \right\} \subset \mathbb{R}^5$$

will be called the viewport set. For practical purposes, one can restrict to viewports inside a given set of feasible viewports $\Lambda \subset X$.

One can now calculate a matrix representation of a projection onto an arbitrary viewport, by combining the matrices above with the matrix representations of the default projections $\pi_d$ and $\pi_\perp$. For this purpose, we transform each vertex to the default viewport space by multiplying its coordinates with $Q_c^{-1}$. Then, we project using either $P_d$ or $P_\perp$ and transform back to the initial coordinate system by multiplying with $Q_c$.

This yields definition 1.2.: Let $\chi$ be a viewport with an associated matrix representation Q and let $\pi_{\chi,*}$ denote a projection onto the viewport $\chi$. Then, a matrix representation of $\pi_{\chi,*}$ is given by $P_{\chi,*} = QP_*Q^{-1}$, where $P_*$ is an orthogonal projection or a perspective projection.

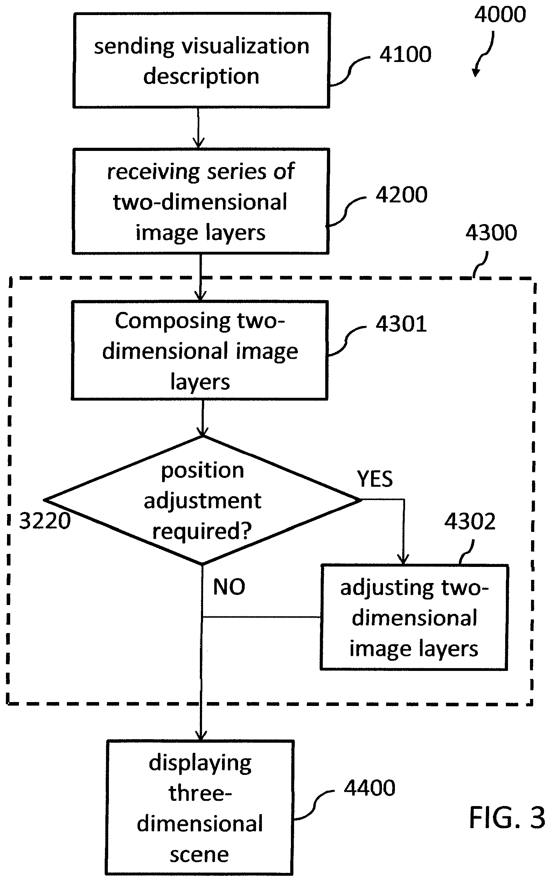

FIG. 3 is a flow chart diagram of a computer implemented method 4000 according to one embodiment of the invention. The method starts with sending 4100 from a client a visualization description of a three-dimensional scene to at least one server 1002, wherein the visualization description comprises position and orientation parameters of the three-dimensional scene. Then the client receives 4200 from the at least one server at least one series of two-dimensional image layers according to the visualization description, wherein each two-dimensional image layer is a representation of a corresponding spatial portion of the three-dimensional scene. The at least one series corresponds to the position and orientation parameters. The client then calculates 4300 the three-dimensional scene by composing 4301 the two-dimensional image layers of the at least one series and, if required, by adjusting 4302 the two-dimensional image layers to a specific position and orientation. After the calculation of the scene the client displays 4400 the calculated three-dimensional scene.

In the sending step 4100 the client 1001 is sending the visualization description, for example in the form as described under FIG. 2, to the server(s) 1002. For example, a user standing in a street wants to receive on a smartphone a three dimensional scene representing a virtual environment, which corresponds to the actual view direction of the user in the street. The user can turn the smartphone in the viewing direction, for example by verifying the view direction with the camera function of the smartphone. When the view direction corresponds to the user's view the user can trigger a request to receive the virtual environment data for the current view. For example, the user can use an interaction function of the smartphone client (e.g., by clicking on the camera release button or using a software function of the client) to send a request to one or more servers for providing the three-dimensional scene data in correspondence with the visualization description so that the scene data is provided in appropriate manner for the client.

The visualization description can be sent to multiple servers, when the task of generating the two-dimensional image layers is distributed on multiple servers in a network or in a cloud based architecture. Commercially available sensors, as for example present in smartphones or tablet PCs, can be used to determine the visualization description parameters at the client side.

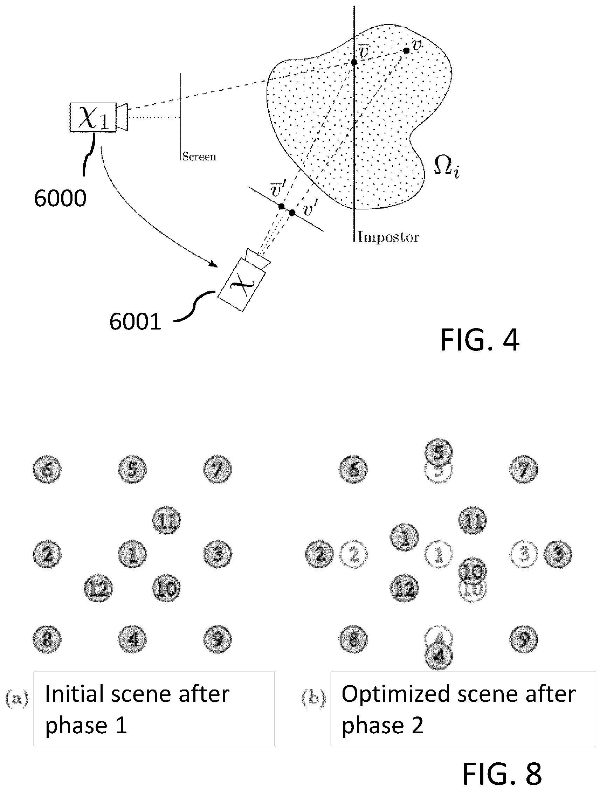

Upon receipt of the visualization description the server 1002 can determine a series of two-dimensional image layers according to the visualization description. Thereby, the two-dimensional image layers are representations of spatial portions of the three-dimensional scene, which correspond to the position and orientation parameters of the visualization description. The method for generating the two-dimensional image layers at the server(s) is described in detail under FIG. 4 and shows various aspects of the invention for handling errors like cell, domain and interaction errors.

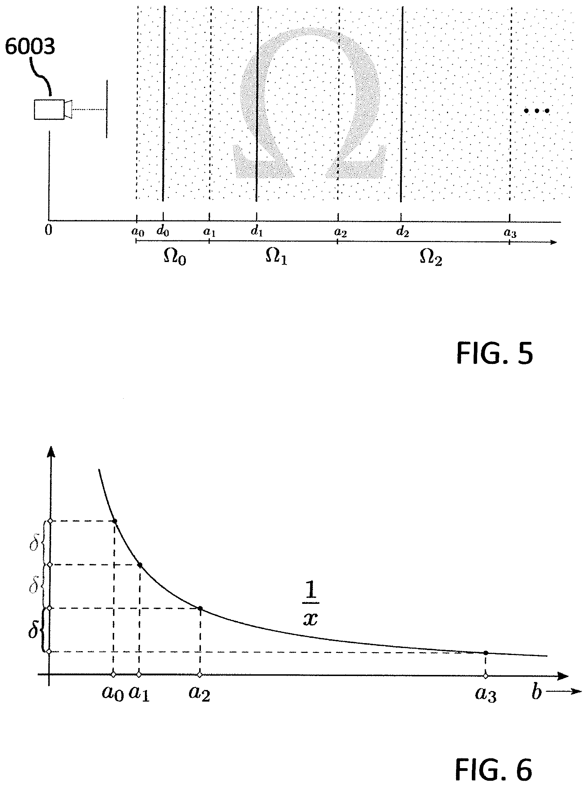

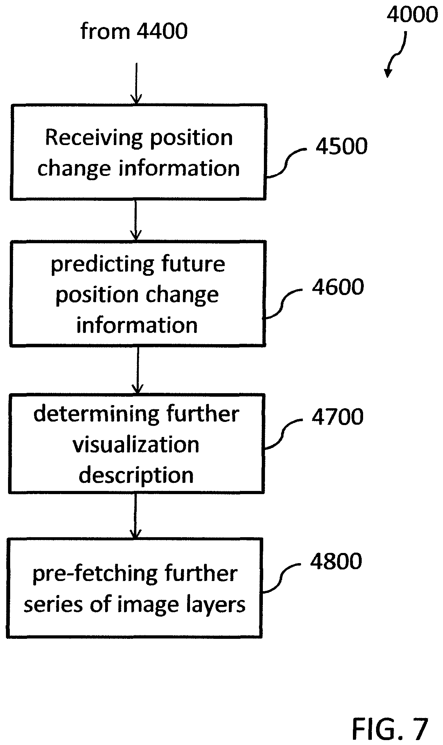

In one embodiment the visualization description may further include at least one partitioning parameter for the three-dimensional scene, telling the server how many two-dimensional layers the client would like to receive for visualizing the scene. A detailed example for such partitioning parameters is described under FIG. 6 and FIG. 7.

In another embodiment the visualization description may further include at least one client capability parameter. A client capability parameter may relate to specific information known by the client, such as client hardware constraints, such as limitations in processor speed or memory or a certain display size or resolution. It may also relate to connection properties of the communication network between the client and the server(s), such as for example, the maximum bandwidth available between client and server. It can also relate to client user behavior. For example, a typical translation and rotation speed of the user can be applied, where the continuation of the previously detected movement is assumed. Another example is to assume a uniformly distributed change of the user's future movement to anticipate any possible movement of the user. Between those two extreme examples potentially any mix is possible to cover for example a corridor of potential future movements which is as broad as possible but also takes into account a high probability of the user's future movement into a certain direction. In this embodiment, the capability parameter(s) can be used by the server to dynamically calculate a number of two-dimensional image layers, which is appropriate for the requesting client in view of the client's limitations, behavior and/or available connection properties. That is, the number of the spatial portions, in which the entire space of the scene is finally divided by the server, can be adapted to one or more client capability parameters. Alternatively, the dynamic calculation of the number of two-dimensional image layers based on client capability parameters can also occur already at the client. In this case client simply sends the result to the server(s).

The client 1001 then receives at least one series of two-dimensional image layer created by the one or more servers for the three-dimensional scene. In case of using multiple servers or a cloud based architecture a high degree of parallelization can be achieved for the rendering of the two-dimensional image layers. These include data-decomposition (as described in Mäntylä, M. (1988); An introduction to solid modeling; Rockville, Maryland: Computer Science Pr.), screen-space decomposition and corresponding composition methods (as described in Molnar, S., Cox, M., Ellsworth, D. & Fuchs, H. (1994); A sorting classification of parallel rendering; IEEE Computer Graphics and Applications, 14, 23-32). The client composes the scene by layering the image layers in the correct order. That is, the front layer includes the projection of the objects closest to the observer, whereas the back layer includes the projection of the farest objects. The layers in between are composed 4301 into the scene according to the projected objects' distances from the observing user/ client. It can occur that the generated image layers do not exactly correspond to the visualization description or that the observer has already moved a bit from the position, for which the visualization description was generated. To avoid resending of a new visualization description to the server and re-rendering and re-sending of the image layers back to the client, the client can adjust 4302 the two-dimensional image layers to the actual position of the observing user. This allows to save bandwidth in the communication between the client and the server(s) and to save processing power at the server(s) by shifting and/or rotating the two-dimensional image layers accordingly.

FIG. 4 illustrates how the server(s) create the two dimensional image layers according to the visualization description. The characters $\tilde{v}'$ and $\tilde{v}$ as used hereinafter in the description correspond to the characters $\overline{v'}$ and $\overline{v}$, respectively as shown in the following formulas.

Renderable objects of the three-dimensional scene are located in a domain $\Omega$ (spatial portion). A goal is to simplify the scene by replacing spatial portions $\Omega_i$ of $\Omega = \sum \Omega_i$, which will also be referred to as cells hereinafter, with planar representations of their contained objects. The planar representations correspond to the two-dimensional image layers and will also be referred to as impostors hereinafter. An impostor is created using a local central projection with respect to the global viewport to achieve correct reconstruction at composition, wherein correct in this context means that the two-dimensional image layers can be composed at the client into a picture with a pixel-exact result. A central projection is defined by a projection point and a projection area. In each cell the projection is made to a different impostor. Therefore, all projections are different functions. The term local projection is used to emphasize the differences between the various cells even if they refer to the same global projection point. Once the viewport is changed, however, it will introduce an error, since some of the depth information in the impostor creation process is lost.

To determine the error, we will first regard a single cell $\Omega_i$ and a single point $v \in \Omega_i$. We then calculate the impostor representation $\tilde{v}$ of v for a fixed initial viewport 6000 $\chi_1$. For this purpose we project using central projection $\pi_{\chi_1,d}$ where d is roughly the distance between the camera location (position of the user/client) and the approximate center of $\Omega_i$ and obtain

$$\overline{v} = \pi_{\chi_1,d}(v) = \left(\chi_1 \circ \pi_d \circ \chi_1^{-1}\right)(v).$$

Next, we assume changing to another variable viewport 6001 $\chi$ and calculate the images v' of v and $\tilde{v}'$ of $\tilde{v}$ by projecting them with $\pi_{\chi,1}$. Before that we might want to transform the impostor with an affine transformation $\psi$ (i.e. making it face the new viewport). Since we want v' and $\tilde{v}'$ to reside in viewport space we suppress the final transformation. More precisely, we transform back to viewport space with $\chi^{-1}$ which cancels with $\chi$ and obtain

$$\begin{aligned} v' &= \left(\chi^{-1} \circ \pi_{\chi,1}\right)(v) \\ &= \left(\pi_1 \circ \chi^{-1}\right)(v), \end{aligned}$$

$$\begin{aligned} \overline{v}' &= \left(\chi^{-1} \circ \pi_{\chi,1} \circ \psi\right)(\overline{v}) \\ &= \left(\chi^{-1} \circ \pi_{\chi,1} \circ \psi \circ \pi_{\chi_1,d}\right)(v) \\ &= \left(\pi_1 \circ \chi^{-1} \circ \psi \circ \chi_1 \circ \pi_d \circ \chi_1^{-1}\right)(v). \end{aligned}$$

Both v' and $\tilde{v}'$ depend on various parameters like the viewport and impostor orientations. We assume the parameters constituting $\psi$ and the parameter d can be expressed as functions of the parameters of $\chi$, hence v' only depends on $\chi$ and $\tilde{v}'$ depends on both $\chi$ and $\chi_1$. As v' and $\tilde{v}'$ are expressed in viewport space, the last two components of their normalized representatives equal one and are therefore redundant:

Definition 1.3. Let x be a finite point (that is, $x_4 \neq 0$) on the projection plane $x_3 = d$ of a viewport and let x = $(x_1,x_2,d,1)^T$ be its normalized representation. Then

$$\lfloor x \rfloor_{\mathbb{R}^2} := \left(\frac{x_1}{d}, \frac{x_2}{d}\right)^\top$$

will be called the screen space coordinates of x.

We can formulate the problem using only one viewport if we transform the whole setting into $\chi_1$-space with $\chi_1^{-1}$. Then, the problem only depends on the relative viewport change $\chi \circ \chi_1^{-1}$. Now, for any $v \in \Omega$ we can define the error between its original image v' and the image of its impostor representation $\tilde{v}'$. For every point in $\Omega$, if we perform the procedure above, we obtain two images. One image of itself (depending on $\chi$) and one of its impostor representation

(depending on both $\chi$ and $\chi_1$). We define a function, that for any two viewports $\chi,\chi_1$ and for every such point in $\Omega$, yields the distance of the screen space coordinates of its two images.

Definition 1.4. Assume the images v' and $\tilde{v}'$ are finite. We set

$$u\left(v \mid \chi\right) := \lfloor v' \rfloor_{\mathbb{R}^2}, \qquad w\left(v \mid \chi,\chi_1\right) := \lfloor \overline{v}' \rfloor_{\mathbb{R}^2}$$

and define the screen space error

$$S : \begin{cases} \Omega_i \times \Lambda \times \Lambda & \longrightarrow & \mathbb{R} \\ (v \mid \chi, \chi_1) & \longmapsto & \left\| u(v \mid \chi) - w(v \mid \chi, \chi_1) \right\|_2 \end{cases} .$$

As indicated above, we append the parameters to the function's argument list as $S (\upsilon \mid parameter1, parameter2, ...)$.

When regarding reduced problems where several parameters are redundant, we will, for brevity, only list variable parameters.

For practical purposes, one may be interested in functions expressing the error of an entire cell/impostor or even the whole scene, for example the mean error or the maximum error. As the distribution of points inside $\Omega$ is supposed to be unknown we have to assume uniform distribution and can (over-)estimate these errors by integrating the screen space error over a cell or the entire domain as in the following:

Definition 1.5. Let $1 \leq p < \infty$ and denote the number of cells with m. We define the cell error

$$C_{p,i} : \begin{cases} \Lambda \times \Lambda & \longrightarrow & \mathbb{R} \\ (\chi, \chi_1) & \longmapsto & \left\| S(\cdot \mid \chi, \chi_1) \right\|_{L_p(\Omega_i)} \end{cases}$$

and the domain error

$$D_p : \begin{cases} \Lambda \times \Lambda & \longrightarrow & \mathbb{R} \\ (\chi, \chi_1) & \longmapsto & \left\| S(\cdot \mid \chi, \chi_1) \right\|_{L_p(\Omega)} & = & \left[ \sum_{i=0}^{m} C_{p,i}(\chi, \chi_1)^p \, \mathrm{d}v \right]^{1/p} . \end{cases}$$

For $p = \infty$ these are

$$C_{\infty,i}(\chi, \chi_1) = \sup_{v \in \Omega_i} S(v \mid \chi, \chi_1) \quad \text{and} \quad D_\infty(\chi, \chi_1) = \max_{0 \leq i \leq m} \left\{ \sup_{v \in \Omega_i} S(v \mid \chi, \chi_1) \right\} .$$

Two different cases are the mean error (p = 1), the quadratic mean error (p = 2) and the maximum error (p = oo). Just like the screen space error, these cell and domain errors depend on a fixed viewport $\chi_1$, for which the displayed impostors have been initially created, and a variable observer viewport $\chi$. We eliminate the variable viewport at a later stage. This will eventually yield that error function, which is intended to optimize hereafter by an optimal choice of initial viewports.

Enabling interaction, allows leaving control over the observer viewport $\chi$ to the user. Choosing any setup to approximate the scene, one can measure the goodness of the approximation by computing the domain error. As the domain error depends on $\chi$, the scene can be evaluated once the movement of the user is known. It would be advantageous to optimize the scene beforehand, by evaluating the scene without knowledge of $\chi$.

Assuming having n sets of impostors for associated viewports $\chi_1,...\chi_n \in \Lambda \subset X$ at our disposal and, denoting the observer's viewport with $\chi \in \Lambda$, then, for any impostor set $\chi_j$ the domain error is $D_p(\chi,\chi_j)$. The possibility to choose from several impostor sets, allows displaying the set whose initial impostor $\chi_k$ satisfies:

$$D_p(\chi, \chi_k) = \min_{1 \leq j \leq n} D_p(\chi, \chi_j) .$$

Then it is possible to define a probability distribution P with an associated probability density function $\mu$ on A. Conceivable are, for instance, a uniform distribution on A or normal distributions around the current viewport $\chi$. These distributions represent the probability for the respective viewport "to happen", and thus modeling the expected observer movement. One can then calculate the expected value of the error by integrating $I_p$ over A.

Definition 1.6. Let $n \geq 1$. We define the interaction error $I_p : \Lambda^n \to \mathbb{R}$, where

$$I_p(\chi_1, \ldots, \chi_n) := \int_\Lambda \min_{1 \le j \le n} D_p(\chi, \chi_j)\, dP(\chi).$$

Alternatively, one could as well define the interaction error as the (weighted) supremum

$$\sup_\Lambda \left\{ \mu(\chi) \min_{1 \le j \le n} D_p(\chi, \chi_j) \right\},$$

which may lead to similar results.

In the following, the focus is on minimizing the expected value of the error. Adding and removing impostor sets results in a decrease and increase of the interaction error $I_p$ respectively. A numerical evaluation of $I_p$ can be implemented using the following algorithm:

1. $\quad$ Ip($\chi_1,\ldots,\chi_n$) $\leftarrow 0$

2. $\quad$ for $\chi \in \Lambda$

3. $\qquad$ $k \leftarrow 0$

4. $\qquad$ for $j \leftarrow 0$ to n

5. $\qquad\qquad$ if $D_p(\chi_i\chi_j) < D_p(\chi_i\chi_k)$

6. $\qquad\qquad\qquad$ $k \leftarrow j$

7. $\qquad\qquad$ $I_p(\chi_1,\ldots,\chi_n) \leftarrow I_p(\chi_1,\ldots,\chi_n) + D_p(\chi_i\chi_k)\mu(\chi)$

8. $\quad$ return Ip($\chi_1,\ldots,\chi_n$)

An advantage of this approach is an error tolerance built into the two-dimensional image layers. This already allows for viewport changes at the client (after having composed the three-dimensional scene on the bases of the received image layers) within the error tolerance without any significant deterioration of the scene visualization for the user. This will be shown in the following.

FIG. 5 illustrates an example of partitioning the entire space $\Omega$ corresponding to the three-dimensional scene into spatial portions for a given viewport 6003. In this example, the spatial portions are $\Omega_0, \Omega_1, \Omega_2,\ldots$, which are defined by the corresponding boundaries $a_0, a_1, a_2,\ldots$ The two-dimensional image layers (impostors) are located at $d_0, d_1, d_2,\ldots$ respectively. All objects of a three-dimensional spatial portion $\Omega_i$ are projected onto the respective two-dimensional image layer $d_i$. Rather than estimating the error for a given geometry, we regard the inverse problem, that is, which geometry is needed to guarantee a predefined or expected accuracy. For example, to achieve a predefined accuracy a hyperbolic spatial distribution can be calculated for the impostors with regards to their distance from the respective viewport. This results in a number of two-dimensional image layers (impostors), which is needed to achieve the predefined or expected accuracy.

Assuming $\Omega = \{(x_1,x_2,x_3,1)^\top \in \mathbb{P}^3 | a \le x_3 < b\}$ with $0 < a < b \le \infty$ we want to find a decomposition $\Omega = \sum \Omega_i$, with:

$$\Omega_i = \{(x_1, x_2, x_3, 1)^\top \in \mathbb{P}^3 \mid a_i \le x_3 < a_{i+1}\} \quad \text{for} \quad i = 0, \ldots, m-1,$$

$$\Omega_m = \{(x_1, x_2, x_3, 1)^\top \in \mathbb{P}^3 \mid a_m \le x_3 < b\},$$

and a finite sequence $a = a_0 < a_1 < \ldots < a_m < b$, such that for all $c_r < R$ the domain error $I_\infty(c_r)$ is smaller than a given $\varepsilon > 0$. For any $\Omega_i$, $i = 0,\ldots,m-1$ it is

$$C_{\infty,i}(c_r) = \frac{c_r}{2}\left(\frac{1}{a_i} - \frac{1}{a_{i+1}}\right) < \frac{R}{2}\left(\frac{1}{a_i} - \frac{1}{a_{i+1}}\right) \overset{!}{\le} \varepsilon \iff a_{i+1} \le \frac{1}{a_i^{-1} - \delta},$$

with $\delta := 2\varepsilon R^{-1}$.
This leads to the recursive sequence

$$a_i := \left(\frac{1}{a_{i-1}} - \delta\right)^{-1} \quad \text{for} \quad i = 0, \dots, m-1$$

starting with $a_0 := a$. Rewriting this recursive sequence as $1/a_i = 2/a_{i-1} - \delta$ we see that the reciprocal sequence has the closed form $1/a_i = 1/a_0 - \delta i$ (which also leads to the closed form $a_i = (1/a_0 - \delta i)^{-1}$ of the original sequence. The original sequence is strictly monotonically increasing while $a_i > 0$, as the reciprocal sequence is strictly monotonically decreasing. Hence the sequence terminates once $a_{i+1} \ge b$ or $a_{i+1} \le 0$, which we can merge into the single termination condition $1/a_{i+1} \le 1/b$ (or $1/a_{i+1} \le 0$ in the case $b = \infty$).

FIG. 6 shows a hyperbolic graph for finding a set of partitioning parameters (cell borders $a_0$, $a_1$, $a_2$,...) for defining the spatial portions in which the entire space is to be divided according to FIG. 7. One can find appropriate cell borders by

$$a_i = \left(\frac{1}{a_0} - \delta i\right)^{-1} \quad \text{while} \quad \frac{1}{a_i} > \frac{1}{b}.$$

For example, demanding $a := 3/2$, $b := \infty$ and $\varepsilon/R := 1/10$ yields the sequence

$$a_0 = \frac{3}{2} = \frac{15}{10}, \ a_1 = \frac{15}{7}, \ a_2 = \frac{15}{4}, \ a_3 = \frac{15}{1}.$$

The next element would be negative, hence we do not need any additional impostor planes (image layers) after $a_3 = 15$. That is, one can formally set $a_4 = \infty$ and calculate $d_3$ in a way that stays bounded and converges to $2a$, that is, as $d_3 = 2a_3$.

As a result, we only need 4 impostor planes (two-dimensional image layers) at

$$d_0 = \frac{30}{17}, \ d_1 = \frac{30}{11}, \ d_2 = \frac{30}{5} = 6, \ \text{and } d_3 = 30,$$

(cf. FIG. 7) to display the scene with a maximum pixel error which is only one tenth of the viewport offset. In other words, one can move the viewport by the equivalent of 10 pixels, while keeping the maximum error smaller than one pixel.

In this manner, for any $\delta > 0$, we obtain a set of m impostors with a ball $c_r < R(\delta)$ as their validity region, where $c_r$ is the distance to the initial viewport. If A, the area of permissible viewport changes exceeds said validity region, we need several sets of impostors, each with a different initial viewport, to cover $\Lambda$. We can then switch between the different sets as needed. If we denote the number of initial viewports with n, then the total number of impostors needed to display the scene with the required accuracy is nm. While increasing m (thereby decreasing $\delta$) does affect the goodness of a set of impostors, it does not affect the accuracy of the actual image, since we change the size of the validity region (that is, the radius R) accordingly, such that the maximum error $\varepsilon = \delta R/2$ is constant. However, for a given $\varepsilon$ we can still change the ratio of R and $\delta$.

To determine the effects of changing the ratio of $\delta$ and R one may first examine how R depends on m and how n depends on R. For a large radius R we need many layers per impostor set (that is, many cells) to archive the required accuracy, thus m is large, but we need less sets to cover $\Lambda$, thus n is small. Conversely, for a small radius, m is small and n is large. This raises the question whether it is preferable to have few sets of many layers or many sets of few layers.

As the area of permissible viewports $\Lambda$ is, in this case, two-dimensional, the number of viewports n is proportional to $R^{-2}$, independent of the tiling method. Regarding FIG. 6 we observe, that:

$$m = \left\lceil \frac{1}{\delta} \left( \frac{1}{a} - \frac{1}{b} \right) \right\rceil = \left\lceil \frac{R}{2\varepsilon} \left( \frac{1}{a} - \frac{1}{b} \right) \right\rceil,$$

which implies $R \leq 2\varepsilon \, (1/a - 1/b)^{-1} \, m$. Since any R satisfying this inequality ensures an error lower or equal to $\varepsilon$, we can just as well set

$$R := 2\varepsilon \left( \frac{1}{a} - \frac{1}{b} \right)^{-1} m.$$

One can see that, for a constant $\varepsilon$, the number of cells m is proportional to R. Hence, the total number of impostors nm is proportional to $R^{-1}$. To minimize bandwidth usage, one can minimize nm which means to maximize R. Hence, in this case, few sets of many impostors are to be preferred. However, maximizing R also increases the number of impostors displayed at the same time thus maximizing render time. Conversely, to minimize render time, one can prefer many sets of few impostors, thus maximizing bandwidth usage. For render times faster than 20ms (50fps) the human eye is too slow to spot the difference.

Another version of the previous equation is

$$\varepsilon = \frac{R}{2m} \left( \frac{1}{a} - \frac{1}{b} \right) \sim m^{-1} R \sim m^{-1} n^{-1/2}.$$

This means, that for a fixed number of impostors mn, maximizing m at the expense of n results in a decrease of the maximum error. This is also true in the general case, where $\varepsilon$ is roughly proportional to $m^{-1} n^{-1/5}$. Hence, as m is also the number of impostors displayed at the same time, one can choose m just as large as the rendering capabilities of the client device allow.

With the knowledge of m(R) one can optimize the above problem even further: Since, in general, the maximum depth $a_{m+1}$ of the last cell is larger than b, the cell error for that cell is bounded by a certain value smaller than $\varepsilon$:

$$C_{\infty,m}(c_r) < \frac{R}{2} \left( \frac{1}{a_m} - \frac{1}{b} \right) \leq \frac{R}{2} \left( \frac{1}{a_m} - \frac{1}{a_{m+1}} \right) = \varepsilon$$

Therefore one can increase the accuracy (more precisely: decrease the domain error) by making the first m- 1 cells smaller at the expense of the last cell, until the cell error is the same for all cells. This is the case if the reciprocals of $(a_i)$ are equidistant in the interval $[a^{-1}, b^{-1}]$

The accuracy depends on the number of cells (two-dimensional image layers) m. In case of a linearized error for the 5-dimensional case (three dimensions for the position parameters and two dimensions for the orientation parameters) we find for the accuracy with n viewports: $I_\infty = O(m^{-1} n^{-1/5})$, where, O stands for the Landau-symbol for order of magnitude. That is, it may be advantageous to use only a few viewports with a higher number of image layers rather than using many viewports with, for example, only one image layer. The dependence of the accuracy on the number of image layers m and the number of viewports n implies for example, that 10000 viewports each with one image layer provide the same accuracy as one viewport with ten image layers. In the first case 10000 image layers are to be transmitted from the server(s) 1002 to the client 1001, whereas in the second case only 10 image layers are transmitted. This is a large reduction in bandwidth requirements, which becomes possible through this aspect of the invention. For example, this behavior allows for significant movement of the user/client without reaching a point where the current viewport becomes invalid because the series of already loaded two-dimensional image layers has a corresponding accuracy. That is, with a relatively low number of image layers it already becomes possible to allow significant movement of the user /client without triggering the reloading of image layers for a new viewport.

FIG. 7 is a flow chart diagram of further optional step of computer implemented method 4000. After client has displayed 4400 the scene to the user, the client may receive 4500 position change information. This can occur by using the same or similar sensor information as for generating the visualization information. For example, a GPS sensor may recognize that the user with the client has moved to another position. Over time this can lead to invalidity of the currently displayed scene if the position change becomes too big to be corrected through the shifting and rotating functions applied to the scene for adjusting the scene as described under FIG. 3.

The client can then predict 4600 future position change information on the basis of the received position change information. For example, the client can extrapolate the future movement based on the current position and a speed vector, which is determined using GPS and/or other sensor data tracking the prior movement of the user. Another possibility to predict the future movement is by using the speed vector of the prior movement in combination with street map information of a navigational system. For example, if the user is moving along a street at constant speed, which is taking a turn, the prediction algorithm can anticipate the future user position by taking also into account the actual street map information about road bends or the like.

For the anticipated future position of the user/client, the client can determine 4700 a further visualization description associated with a further viewport corresponding to the predicted future position change information. The further visualization description is different from the initial visualization description, which was sent 4100 (cf. FIG. 3) to the server previously.

The client can then perform pre-fetching 4800 at least a further series of two-dimensional image layers for the further visualization description by repeating the sending 4100, receiving 4200 and calculating 4300 steps for the further visualization description. If the client can perform the pre-fetching for the anticipated position included in the further visualization description, the respective two-dimensional images layers will already be received by the client before the user/client reaches a position where the initially received series of image layers for the initial visualization description becomes invalid. Thus, the user will have already the updated scene visualization data available on the client when finally the new position is reached. Alternatively, the pre-fetching can be performed by the at least one server. That is, the server receives the position change information from the client and calculates the further visualization description as well as the respective two-dimensional image layers, which are then pushed back to the client.

In the following we describe algorithms which may be used to calculate further viewports for which corresponding series of two dimensional images layers are to be pre-fetched. The algorithms can be based on the Fedorov algorithm or the Wynn, Mitchel and Miller algorithm known in the field of experimental planning. Those algorithms are originally used for optimization of sensor placements in experimental setups to achieve the highest accuracy or most robust reading or computation of unknown parameters when the experiment is undertaken.

By modifying those algorithms, one can develop an algorithm which yields an optimal distribution of initial viewport sets. A goal is to find a set of further viewports $\{\chi_1,...,\chi_n\} \subset \Lambda$ for a given $n \in \mathbb{N}$, which minimizes the inspection error $I_p(\chi_1,...,\chi_n)$, which is an important error with regards to the movement of the user/client. Adding a viewport causes a decrease of the inspection error, while removing a viewport is increasing it. On the basis of the Wynn, Mitchel and Miller algorithm one can start with an initial set of n viewports and hope to find an optimal new viewport set by repeating the two following steps:

• Add the new viewport for which the decrease of the inspection error is maximal.

• Remove the new viewport for which the increase of the inspection error is minimal.

This can be implemented by the following algorithm:

1.     Begin with an arbitrary set of n viewports $\chi_1,...,\chi_n$

2.     repeat

3.         $I_0 \leftarrow I_p(\chi_1,...,\chi_n)$

4.         $I_{min} \leftarrow I_0$

5.         for $\chi \in \Lambda$

6.             if $I_p(\chi_1,...,\chi_n,\chi) < I_{min}$

7.                 $\chi_{n+1} \leftarrow \chi$

8.                 $I_{min} \leftarrow I_p(\chi_1,...,\chi_n,\chi)$

9.         Add $\chi_{n+1}$ to the set of viewports

10.        $I_{min} \leftarrow I_0$

11.        for $i \leftarrow 1$ to $n + 1$

12.           if $I_p(\chi_1,...,\chi_{i-1},\chi_{i+1},...,\chi_{n+1}) < I_{min}$

13.              $k \leftarrow i$

14.              $I_{min} \leftarrow I_p(\chi_1,...,\chi_{k-1},\chi_{k+1},...,\chi_{n+1})$

15.        Remove $\chi_k$ from the set of viewports

16.        $(\chi_1,...,\chi_n) \leftarrow (\chi_1,...,\chi_{k-1},\chi_{k+1},...,\chi_{n+1})$

17.    until $I_0 - I_{min} < \kappa$

The initial viewport set is chosen randomly from the set of permissible viewports (1.). From there on, the algorithm is optimizing the set in a loop starting at step (2.). The initial interaction error for the current set is computed (3.) to enable comparisons with extended or modified sets. The current minimal interaction error for extended sets is memorized in step (4.), and in step (5.) the set of all permissible viewports are iterated as candidates for extension. In step (6.) an extended set is compared to the current minimal interaction error, if it is lower, the new viewport is memorized as a candidate in (7.) and the new minimum is stored in (8.). After iteration over all permissible viewports the best candidate is added to the set (9.), and since in the next part a viewport will be taken from the set, the original error without the latest addition is taken as a reference (10.). Now, the loop iterates through the set of viewports (11.) and compares the set when the regarded viewport is removed with the current reference (12.). If the error is smaller than the reference, the regarded viewport is stored as the current candidate (13.) and the reference is updated (14.). The last candidate is removed from the set (15.,16.) and the outer loop is iterated as long there is a significant improvement (17.).

The algorithm is monotonically decreasing in $I_p$. One can implement the algorithm for the well-understood reduced problem of parallel viewport translations. This has several advantages. For example, it can be implemented on thin clients; the domain error does not need to be calculated by integration leading to moderate calculation times; and, since A is only two-dimensional, the results can be easily displayed on any commercially available display means. Rather than converging to a scene with n viewports, the algorithm, after a while, cyclically generates subsets of cardinality n of one scene with n + 1 points. At this point the first step of the algorithm always reproduces the same (n + 1)-point scene, from which in the second step one point is removed resulting in a subsets with n elements. Points are removed cyclically, which is due to the fact that in this implementation of the algorithm, from several points of equal weakness the first one is removed, while new elements are always added at the end. Since, in a way, the algorithm converges to an (n + 1)-point scene, one can eradicate that problem by simply switching the two steps of the algorithm. Then the algorithm converges to a scene with n-points, and the subsets of cardinality n - 1 are those generated between the steps. Once the optimal n-point scene has been reached, the algorithm cyclically picks a point from the set, removes it from the scene in the first step and immediately adds it again in the second step. Hence, the algorithm has converged once n iterations in a row do not result in a different scene.

An alternative version of the algorithm is given below, with the two steps interchanged and the new termination

condition.

1.     Begin with an arbitrary set of n viewports $\chi_1,...,\chi_n$

2.     repeat

3.       $I_0 \leftarrow I_p(\chi_1,...,\chi_n)$

4.       $I_{min} \leftarrow \infty$

5.       for $i \leftarrow 1$ to $n$

6.          if $I_p(\chi_1,...,\chi_{i-1},\chi_{i+1},...,\chi_n) < I_{min}$

7.            $k \leftarrow i$

8.            $I_{min} \leftarrow I_p(\chi_1,...,\chi_{i-1},\chi_{i+1},...,\chi_n)$

9.       Remove $\chi_k$ from the set of viewports

10.      $(\chi_1,...,\chi_{n-1}) \leftarrow (\chi_1,...,\chi_{k-1},\chi_{k+1},...,\chi_n)$

11.      $I_{min} \leftarrow I_0$

12.      for $\chi \in \Lambda$

13.         if $I_p(\chi_1,...,\chi_{n-1},\chi) \le I_{min}$

14.           $\chi_n \leftarrow \chi$

15.           $I_{min} \leftarrow I_p(\chi_1,...,\chi_{n-1},\chi)$

16.      Add $\chi_n$ to the set of viewports

17.      if $I_0 = I_{min}$

18.        $m \leftarrow m + 1$

19.      else

20.        $m \leftarrow 0$

21.   until $m = n$

The initial viewport set is chosen randomly from the set of permissible viewports (1.). From there on, the algorithm is optimizing the set in a loop starting at step (2.). The initial interaction error for the current set is computed (3.) to enable comparisons with extended or modified sets. The largest representable number is assumed as the current minimum (4.), and in step (5.) the set of all permissible viewports are iterated as candidates for exclusion. In step (6.) a smaller set is compared to the current minimal interaction error, if it is lower, the new viewport is memorized as a candidate in (7.) and the new minimum is stored in (8.). After iteration over all permissible viewports the least significant contributor is removed from the set (9., 10.), and since in the next part a viewport will be added to the set, the original error without the latest omission is taken as a reference (11.). Now, the loop iterates through the set of viewports (12.) and compares the set when the regarded viewport is added with the current reference (13.). If the error is smaller than the reference, the regarded viewport is stored as the current candidate (14.) and the reference is updated (15.). The last candidate is added to the set (16.). In case of equivalent omission candidates, the algorithm prefers the first viewport in the set, which might be the best to be added again as the new last viewport. In that case, the error remains unchanged, which is tested in (17.), and to allow testing omission of all viewports once, a counter is increased in (18.). If the error has changed (19.) this counter is reset (20.) and the outer loop terminates (21.) after n unsuccessful omission steps. The alternative version of the algorithm is also monotonically decreasing in the interaction error $I_p$. With the two interchanged steps the alternative algorithm does converge to an n-point scene as desired. However, especially for large n, it may require quite a lot of steps to turn the arbitrary initial scene into a "reasonable" scene which is then optimized further. Therefore, rather than starting with a random scene, the algorithm may be improved by generating an initial scene as follows.

On the basis of the Fedorov algorithm one can start with an empty scene and successively add points, which are in some sense optimal, until one gets to an n-point scene. We do this by simply running the second step of the algorithm n times. This way, every point added to the initial scene maximizes the decrease of the inspection error, resulting in an initial scene which is rather good already. Although the point added in the k-th step in this manner is the optimal choice, the resulting k-point scene is usually not optimal. For example, for n = 3 and a normal distribution, the first point will end up in the center and the second and third point will end up opposite of each other forming a line with the first point, while the optimal scene would be three points forming an equilateral triangle around the center.

On this basis a third, two-phased version of the algorithm including the generation of an initial scene is given below. To construct an initial scene, an outer loop iterates over the number of demanded viewports (1.). For each iteration, the largest representable number is assumed as the first minimal error (2.). Then an inner loop iterates over all permissible viewports (3.) and compares the enlarged set with the current minimum (4.), if the new candidate performs better than the previous minimum, the candidate is memorized (5.), and the minimum is updated (6.). The best candidate is then added to the viewport set (7.). The steps from (8.) until (27.) are already described in the previous algorithm from step (2.) until (21.).

Phase 1: Construction of initial scene

1.      for $j \leftarrow 1$ to $n$

2.          $I_{min} \leftarrow \infty$

3.          for $\chi \in \Lambda$

4.              if $I_p (\chi_1 ,...,\chi_{j-1} ,\chi) < I_{min}$

5.                  $\chi_j \leftarrow \chi$

6.                  $I_{min} \leftarrow I_p (\chi_1 ,...,\chi_{j-1} ,\chi)$

7.          Add $\chi_j$ to the set of viewports

Phase 2: Optimization

8.     repeat

9.          $I_0 \leftarrow I_p(\chi_1,...,\chi_n)$

10.         $I_{min} \leftarrow I_0$

11.         for $i \leftarrow 1$ to n

12.             if $I_p(\chi_1,...,\chi_{i-1},\chi_{i+1},...,\chi_n) < I_{min}$

13.                 $k \leftarrow i$

14.                 $I_{min} \leftarrow I_p(\chi_1,...,\chi_{i-1},\chi_{i+1},...,\chi_n)$

15.         Remove $\chi_k$ from the set of viewports

16.         $(\chi_1,...,\chi_{n-1}) \leftarrow (\chi_1,...,\chi_{k-1},\chi_{k+1},...,\chi_n)$

17.         $I_{min} \leftarrow I_0$

18.         for $\chi \in \Lambda$

19.             if $I_p(\chi_1,...,\chi_{n-1},\chi) < I_{min}$

20.                 $\chi_n \leftarrow \chi$

21.                 $I_{min} \leftarrow I_p(\chi_1,...,\chi_{n-1},\chi)$

22.         Add $\chi_n$ to the set of viewports

23.         if $I_0 = I_{min}$

24.             $m \leftarrow m + 1$

25.         else

26.             $m \leftarrow 0$

27.     until $m = n$

FIG. 8 shows resulting patterns of the initial and the optimal scene of the previously described third version of the algorithm. The numbering of the points reflects their order of appearance in phase 1. Part (a) shows the initial scene after phase 1 for n=12 and a normal distribution. Part (b) shows the result of the optimization after phase 2 (grey bubbles 1-12) vs. the initial scene (white bubbles 1,2,3,4,5,10). Where a corresponding white bubble is not visible in the part (b) the initial scene is equal to the optimized scene. As long as the observer is not moving, pre-fetching the viewports as proposed by the algorithm results in an optimal set of data sets. In general, the optimal viewport distribution for any two different observer locations do not need to share any viewports. Always pre-fetching those data sets being optimal for the current observer location, may require updating all data sets whenever the observer is moving. Because the algorithm works by optimizing a given viewport distribution, it can be used adaptively. That is, rather than pre-fetching those data sets for the optimal distribution, one can update the current state, where all updates are in order of their importance. This way, even though the intermediate steps might not be optimal, every update is taking account of the data sets already available on the client. An optimal distribution can be attained, if the observer is standing still long enough for all data sets to be updated to their optimal viewport. This way, also time-dependent probability distributions (for instance, a normal distribution centered at the current observer location) can be used.

The run-time of the third version of the algorithm as described under FIG. 7 depends mainly on n the number of viewports, and q the number of points we use to discretize A. q is of greater significance, as it is larger than n. Because a two-phase algorithm is used where the first phase is invoked only once, the ratio of n and the number of iterations of the second phase I affects how much of the overall run-time is due to which phase. The complexity of the algorithm can be expressed by counting the number of evaluations of the domain error. Each evaluation of the inspection error of an n-point scene requires qn evaluations of the domain error as, for every $\chi \in A$, we need to find the initial viewport out of n for which the domain error is smallest. This implies computing the domain error for all n initial viewports. Then, the first phase requires q evaluations of the inspection error of a 1-point scene, q evaluations of the inspection error of a 2-point scene, and so on up to q evaluations of an n-point scene. Hence, in the first phase, the domain error needs to be computed $q(q - 2q - ... - nq) = 1/2n(n - 1)q^2 = O(q^2n^2)$ times. In the second phase each iteration, in the first step, requires q evaluations of (n - 1)-point scenes and, in the second step, n - 2 evaluations of n-point scenes. Hence, the second phase requires the domain error to be computed $q(q(n - 1)) - (n - 2)(qn) = q^2n - (n^2 - n - 1)q = O(q^2n)$ times per iteration. Altogether, the complexity is $O(q^2(n^2 - in))$, that is, if the number of iterations is of the same order of magnitude as n, the complexity is $O(q^2n^2)$, otherwise $O(q^2n)$.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program of claim 9, can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

## Claims

1.  A computer implemented method (4000) for scene visualization, comprising:

    sending (4100) from a client (1001) a visualization description of a three-dimensional scene to at least one server (1002), wherein the visualization description comprises position and orientation parameters of the three-dimensional scene and the position parameters indicate a view position and the orientation parameters indicate a view orientation in respect of the three-dimensional scene;
    receiving (4200) at the client (1001) from the at least one server (1002) at least one series of two-dimensional

image layers ($d_0$, $d_1$, $d_2$) according to the visualization description, wherein each two-dimensional image layer ($d_0$, $d_1$, $d_2$) is a representation of a corresponding spatial portion ($\Omega_0$, $\Omega_1$, $\Omega_2$) of the three-dimensional scene, the at least one series corresponding to the position and orientation parameters, and wherein a front layer of the series includes a projection of objects closest to the view position and a back layer of the series includes the projection of the farest objects;

calculating (4300) at the client (1001) the three-dimensional scene by composing (4301) the two-dimensional image layers ($d_0$, $d_1$, $d_2$) of the at least one series and, if required, by adjusting (4302) the two-dimensional image layers to a specific position and orientation; and

displaying (4400) the calculated three-dimensional scene at the client (1001).

2. The method of claim 1, wherein the visualization description further comprises at least one client capability parameter and wherein the spatial portions ($\Omega_0$, $\Omega_1$, $\Omega_2$) are being adapted to the at least one client capability parameter.

3. The method of claim 1 or 2, further comprising:

receiving (4500) position change information at the client;

predicting (4600) future position change information on the basis of the received position change information;

determining (4700) a further visualization description corresponding to the predicted future position change information; and

pre-fetching (4800) at least a further series of two-dimensional image layers for the further visualization description by repeating the sending, receiving and calculating steps for the further visualization description.

4. The method of any one of the claims 1 to 3, wherein the at least one client capability parameter relates to client hardware constraints and/or relates to connection properties between the client (1001) and the at least one server (1002) and/or relates to client user behavior.

5. The method of any one of the claims 1 to 4, wherein the visualization description further comprises at least one partitioning parameter for the three-dimensional scene.

6. The method of claim any one of the previous claims, wherein each image layer has an error contribution and the error contribution is monotonically decreasing from the front layer to the back layer.

7. The method of any one of the claims 1 to 6, wherein adjusting the two-dimensional image layers to a specific position comprises shifting the two-dimensional image layers of the series.

8. The method of any one of the claims 1 to 6, wherein adjusting the two-dimensional image layers to a specific position comprises rotating the two-dimensional image layers of the series.

9. The method of any one of the previous claims, wherein the two-dimensional image layers ($d_0$, $d_1$, $d_2$) have a hyperbolic spatial distribution with regards to their distance from the view position.

10. A computer program product that when loaded into a memory of a computing device and executed by at least one processor of the computing device executes the steps of the computer implemented method according to any one of the claims 1 to 9.

11. A client computer (1001) comprising:

an interface component configured to send (4100) a visualization description of a three-dimensional scene to at least one server (1002), wherein the visualization description comprises position and orientation parameters of the three-dimensional scene and the position parameters indicate a view position and the orientation parameters indicate a view orientation in respect of the three-dimensional scene, and to receive (4200) from the at least one server (1002) at least one series of two-dimensional image layers ($d_0$, $d_1$, $d_2$) according to the visualization description, wherein each two-dimensional image layer ($d_0$, $d_1$, $d_2$) is a representation of a corresponding spatial portion ($\Omega_0$, $\Omega_1$, $\Omega_2$) of the three-dimensional scene, the at least one series corresponding to the position and orientation parameters, and wherein a front layer of the series includes a projection of objects closest to the view position and a back layer of the series includes the projection of the farest objects;

a memory component configured to store the at least one series of two-dimensional image layers ($d_0$, $d_1$, $d_2$);

a processor component configured to calculate (4300) the three-dimensional scene by composing (4301) the two-dimensional image layers ($d_0$, $d_1$, $d_2$) of the at least one series and, if required, by adjusting (4302) the two-dimensional image layers to a specific position and orientation; and

a display component configured to display (4400) the calculated three-dimensional scene.

12. The client computer of claim 11, wherein the processing component is further configured to capture at least one client capability parameter and wherein the interface component is configured to send the at least one client capability parameter together with the visualization description to the at least one server (1002) as an input for the adaptation of the spatial portions ($\Omega_0$, $\Omega_1$, $\Omega_2$) to a corresponding capability of the client (1001).

13. The client computer of claim 11 or 12, further comprising:

a positioning component configured to receive (4500) position change information;
wherein the processing component is further configured to:

predict (4600) future position change information on the basis of the received position change information;
determine (4700) a further visualization description corresponding to the predicted future position change information; and
pre-fetch (4800) at least a further series of two-dimensional image layers for the further visualization description by repeating the sending, receiving and calculating steps for the further visualization description.

14. The client computer of any one of the claims 11 to 13, wherein processing component is further configured to determine at least one partitioning parameter for the three-dimensional scene.

15. A computer system (1000) comprising:

a client computer (1001) configured according to any one of the claims 11 to 14; and
at least one server computer (1002) communicatively coupled to the client computer (1001) configured to generate the at least one series of two-dimensional image layers ($d_0$, $d_1$, $d_2$) according to the visualization description.

**Patentansprüche**

1. Computerimplementiertes Verfahren (4000) zur Szenenvisualisierung, das Folgendes umfasst:

Senden (4100) einer Visualisierungsbeschreibung einer dreidimensionalen Szene von einem Client (1001) an mindestens einen Server (1002), wobei die Visualisierungsbeschreibung Positions- und Orientierungsparameter der dreidimensionalen Szene umfasst und wobei die Positionsparameter eine Ansichtsposition anzeigen und die Orientierungsparameter eine Blickausrichtung in Bezug auf die dreidimensionale Szene anzeigen;
Empfangen (4200) am Client (1001) aus mindestens einem Server (1002) mindestens einer Reihe von zweidimensionalen Bildebenen ($d_0$, $d_1$, $d_2$) gemäß der Visualisierungsbeschreibung, wobei jede zweidimensionale Bildebene ($d_0$, $d_1$, $d_2$) eine Darstellung eines entsprechenden räumlichen Abschnitts ($\Omega_0$, $\Omega_1$, $\Omega_2$) der dreidimensionalen Szene ist, wobei mindestens eine Reihe den Positions- und Orientierungsparametern entspricht und wobei eine vordere Ebene der Serie eine Projektion von Objekten beinhaltet, die der Ansichtsposition am nächsten ist und wobei eine hintere Ebene der Serie die Projektion der entferntesten Objekte beinhaltet;
Berechnen (4300) beim Client (1001) der dreidimensionalen Szene durch Zusammensetzen (4301) der zweidimensionalen Bildebenen ($d_0$, $d_1$, $d_2$) der mindestens einen Serie sowie gegebenenfalls durch Anpassen (4302) der zweidimensionalen Bildebenen an eine bestimmte Position und Ausrichtung; und
Darstellen (4400) der berechneten dreidimensionalen Szene am Client (1001).

2. Verfahren nach Anspruch 1, wobei die Beschreibung der Visualisierung ferner mindestens einen Client-Fähigkeitsparameter umfasst und wobei die räumlichen Abschnitte ($\Omega_0$, $\Omega_1$, $\Omega_2$) an mindestens einen Client-Fähigkeitsparameter angepasst werden.

3. Verfahren nach Anspruch 1 oder 2, das ferner Folgendes umfasst:

Empfangen (4500) von Positionsänderungsinformationen beim Client;

Vorhersagen (4600) zukünftiger Positionsänderungsinformationen, basierend auf den empfangenen Positionsänderungsinformationen;

Bestimmen (4700) einer weiteren Visualisierungsbeschreibung entsprechend der vorhergesagten zukünftigen Positionsänderungsinformation; sowie Vorabrufen (4800) von mindestens einer weiteren Reihe von zweidimensionalen Bildebenen für die weitere Visualisierungsbeschreibung durch Wiederholen der Sende-, Empfangs- und Berechnungsschritte für die weitere Visualisierungsbeschreibung.

4. Verfahren nach einem der Ansprüche 1 bis 3, wobei sich mindestens ein Client-Fähigkeitsparameter auf die Client-Hardwarebeschränkungen und/oder auf die Verbindungseigenschaften zwischen dem Client (1001) und auf den mindestens einen Server (1002) und/oder auf das Verhalten der Client-Benutzer bezieht.

5. Verfahren nach einem der Ansprüche 1 bis 4, wobei die Visualisierungsbeschreibung für die dreidimensionale Szene ferner mindestens einen Partitionierungsparameter umfasst.

6. Verfahren zur Inanspruchnahme eines der vorhergehenden Ansprüche, wobei jede Bildebene einen Fehlerbeitrag aufweist und der Fehlerbeitrag von der vorderen Ebene zur hinteren Ebene monoton abnimmt.

7. Verfahren nach einem der Ansprüche 1 bis 6, wobei das Anpassen der zweidimensionalen Bildebenen an eine bestimmte Position das Verschieben der zweidimensionalen Bildebenen der Serie umfasst.

8. Verfahren nach einem der Ansprüche 1 bis 6, wobei das Anpassen der zweidimensionalen Bildebenen an eine bestimmte Position das Drehen der zweidimensionalen Bildebenen der Serie umfasst.

9. Verfahren nach einem der vorhergehenden Ansprüche, wobei die zweidimensionalen Bildschichten ($d_0$, $d_1$, $d_2$) eine hyperbolische räumliche Verteilung in Bezug auf ihren Abstand von der Betrachtungsposition aufweisen.

10. Computerprogramm-Produkt, das wenn es in einen Speicher einer Datenverarbeitungsvorrichtung geladen und von mindestens einem Prozessor der Datenverarbeitungsvorrichtung ausgeführt wird, die Schritte des computerimplementierten Verfahrens nach einem der Ansprüche 1 bis 9 ausführt.

11. Ein Client-Computer (1001) mit:

einer Schnittstellenkomponente, die konfiguriert ist, um (4100) eine Visualisierungsbeschreibung einer dreidimensionalen Szene an mindestens einen Server (1002) zu senden, wobei die Visualisierungsbeschreibung Positions- und Orientierungsparameter der dreidimensionalen Szene beinhaltet und die Positionsparameter eine Ansichtsposition angeben und die Orientierungsparameter eine Blickausrichtung in Bezug auf die dreidimensionale Szene angeben und von dem mindestens einen Server (1002) mindestens eine Reihe von zweidimensionalen Bildebenen ($d_0$, $d_1$, $d_2$) gemäß der Visualisierungsbeschreibung (4200) empfangen, wobei jede zweidimensionale Bildebene ($d_0$, $d_1$, $d_2$) eine Darstellung eines entsprechenden räumlichen Abschnitts ($\Omega_0$, $\Omega_1$, $\Omega_2$) der dreidimensionalen Szene ist, wobei die mindestens eine Reihe den Positions- und Orientierungsparametern entspricht und wobei eine vordere Schicht der Reihe eine Projektion von Objekten beinhaltet, die der Ansichtsposition am nächsten liegen und wobei eine hintere Schicht der Reihe die Projektion der entferntesten Objekte beinhaltet;
einer Speicherkomponente, die so konfiguriert ist, um die mindestens eine Reihe von zweidimensionalen Bildebenen ($d_0$, $d_1$, $d_2$) zu speichern;
einer Verarbeitungskomponente, die so konfiguriert ist, um die dreidimensionale Szene zu berechnen (4300), indem sie die zweidimensionalen Bildebenen ($d_0$, $d_1$, $d_2$) der mindestens einen Serie zusammensetzt (4301) und, falls erforderlich, die zweidimensionalen Bildebenen an eine bestimmte Position und Ausrichtung anpasst (4302); und
einer Anzeigekomponente, die so konfiguriert ist, um die berechnete dreidimensionale Szene anzuzeigen (4400).

12. Client-Computer nach Anspruch 11, bei dem die Verarbeitungskomponente ferner konfiguriert ist, um mindestens einen Client-Fähigkeitsparameter zu erfassen, wobei die Schnittstellenkomponente so konfiguriert ist, um mindestens einen Client-Fähigkeitsparameter zusammen mit der Visualisierungsbeschreibung an den mindestens einen Server (1002) als Eingabe für das Anpassen der räumlichen Abschnitte ($\Omega_0$, $\Omega_1$, $\Omega_2$) an eine entsprechende Fähigkeit des Client (1001) zu senden.

**13.** Client-Computer nach Anspruch 11 oder 12, ferner mit:

einer Positionierungskomponente, die zum Empfangen (4500) von Positionsänderungsinformationen konfiguriert ist;
wobei die Verarbeitungskomponente ferner konfiguriert ist, um:

zukünftige Positionsänderungsinformationen basierend auf den empfangenen Positionsänderungsinformationen vorauszusagen (4600);
eine weitere Visualisierungsbeschreibung entsprechend der vorausgesagten zukünftigen Positionsänderungsinformation zu bestimmen (4700); und
mindestens eine weitere Reihe von zweidimensionalen Bildebenen für die weitere Visualisierungsbeschreibung durch Wiederholen der Sende-, Empfangs- und Berechnungsschritte für die weitere Visualisierungsbeschreibung vorabzurufen (4800).

**14.** Client-Computer nach einem der Ansprüche 11 bis 13, wobei die Prozessorkomponente ferner konfiguriert ist, um mindestens einen Partitionierungsparameter für die dreidimensionale Szene zu bestimmen.

**15.** Computersystem (1000) mit:

einem Client-Computer (1001), der nach einem der Ansprüche 11 bis 14 konfiguriert ist;
und mindestens einem Servercomputer (1002), der mit dem Clientcomputer (1001) kommunikativ gekoppelt ist, der so konfiguriert ist, um die mindestens eine Reihe von zweidimensionalen Bildebenen ($d_0$, $d_1$, $d_2$) gemäß der Visualisierungsbeschreibung zu erzeugen.

**Revendications**

**1.** Procédé mis en oeuvre par ordinateur (4000), destiné à la visualisation d'une scène, comprenant :

l'envoi (4100), à partir d'un client (1001), d'une description de visualisation d'une scène tridimensionnelle à au moins un serveur (1002), dans lequel la description de visualisation comprend des paramètres de position et d'orientation de la scène tridimensionnelle et les paramètres de position indiquent une position de vue et les paramètres d'orientation indiquent une orientation de vue par rapport à la scène tridimensionnelle ;
la réception (4200) par le client (1001), à partir d'au moins un serveur (1002), d'au moins une série de couches d'images bidimensionnelles ($d_0$, $d_1$, $d_2$) selon la description de visualisation, dans lequel chaque couche d'image bidimensionnelle ($d_0$, $d_1$, $d_2$) est une représentation d'une partie spatiale correspondante ($\Omega_0$, $\Omega_1$, $\Omega_2$) de la scène tridimensionnelle, la ou les séries correspondant aux paramètres de position et d'orientation, et dans lequel une couche avant de la série comprend une projection d'objets les plus proches de la position de vue et une couche arrière de la série comprend la projection des objets les plus éloignés ;
le calcul (4300) par le client (1001) de la scène tridimensionnelle en composant (4301) les couches d'images bidimensionnelles ($d_0$, $d_1$, $d_2$) de la ou des série(s) et, si nécessaire, en ajustant (4302) les couches d'images bidimensionnelles à une position et à une orientation spécifiques ; et
l'affichage (4400) de la scène tridimensionnelle calculée par le client (1001).

**2.** Procédé selon la revendication 1, dans lequel la description de visualisation comprend en outre au moins un paramètre de capacité client et dans lequel les parties spatiales ($\Omega_0$, $\Omega_1$, $\Omega_2$) sont en cours d'adaptation au ou aux paramètre(s) de capacité client.

**3.** Procédé selon la revendication 1 ou 2, comprenant en outre :

la réception (4500) des informations de changement de position par le client ;
la prédiction (4600) des informations de changement de position futures sur la base des informations de changement de position reçues ;
la détermination (4700) d'une description de visualisation supplémentaire correspondant aux informations de changement de position futures prédites ; et
la pré-extraction (4800) d'au moins une série de couches d'images bidimensionnelles supplémentaire pour la description de visualisation supplémentaire en répétant les étapes d'envoi, de réception et de calcul pour la description de visualisation supplémentaire.

**4.** Procédé selon l'une quelconque des revendications 1 à 3, dans lequel le ou les paramètre(s) de capacité client concerne/concernent les contraintes matérielles du client et/ou concerne/concernent les propriétés de connexion entre le client (1001) et le ou les serveur(s) (1002) et/ou concerne/concernent le comportement de l'utilisateur client.

**5.** Procédé selon l'une quelconque des revendications 1 à 4, dans lequel la description de visualisation comprend en outre au moins un paramètre de partitionnement pour la scène tridimensionnelle.

**6.** Procédé selon la revendication l'une quelconque des revendications précédentes, dans lequel chaque couche d'image a une contribution d'erreur et la contribution d'erreur diminue de manière monotone de la couche avant vers la couche arrière.

**7.** Procédé selon l'une quelconque des revendications 1 à 6, dans lequel l'ajustement des couches d'images bidimensionnelles à une position spécifique comprend le décalage des couches d'images bidimensionnelles de la série.

**8.** Procédé selon l'une quelconque des revendications 1 à 6, dans lequel l'ajustement des couches d'images bidimensionnelles à une position spécifique comprend la rotation des couches d'images bidimensionnelles de la série.

**9.** Procédé selon l'une quelconque des revendications précédentes, dans lequel les couches d'images bidimensionnelles ($d_0$, $d_1$, $d_2$) ont une distribution spatiale hyperbolique en ce qui concerne leur distance par rapport à la position de vue.

**10.** Produit de programme informatique qui, lorsqu'il est chargé dans une mémoire d'un dispositif informatique et exécuté par au moins un processeur du dispositif informatique, exécute les étapes du procédé mis en oeuvre par ordinateur selon l'une quelconque des revendications 1 à 9.

**11.** Ordinateur client (1001) comprenant :

un composant d'interface configuré pour envoyer (4100) une description de visualisation d'une scène tridimensionnelle à au moins un serveur (1002), dans lequel la description de visualisation comprend des paramètres de position et d'orientation de la scène tridimensionnelle et les paramètres de position indiquent une position de vue et les paramètres d'orientation indiquent une orientation de vue par rapport à la scène tridimensionnelle, et pour recevoir (4200) du ou des serveur(s) (1002) au moins une série de couches d'images bidimensionnelles ($d_0$, $d_1$, $d_2$) selon la description de visualisation, dans lequel chaque couche d'image bidimensionnelle ($d_0$, $d_1$, $d_2$) est une représentation d'une partie spatiale correspondante ($\Omega_0$, $\Omega_1$, $\Omega_2$) de la scène tridimensionnelle, la ou les série(s) correspondant aux paramètres de position et d'orientation, et dans lequel une couche avant de la série comprend une projection d'objets les plus proches de la position de vue et une couche arrière de la série comprend la projection des objets les plus éloignés ;
un composant de mémoire configuré pour stocker la ou les série(s) de couches d'images bidimensionnelles ($d_0$, $d_1$, $d_2$) ;
un composant de processeur configuré pour calculer (4300) la scène tridimensionnelle en composant (4301) les couches d'images bidimensionnelles ($d_0$, $d_1$, $d_2$) d'au moins une série et, si nécessaire, en ajustant (4302) les couches d'images bidimensionnelles à une position et à une orientation spécifiques ; et
un composant d'affichage configuré pour afficher (4400) la scène tridimensionnelle calculée.

**12.** Ordinateur client selon la revendication 11, dans lequel le composant de traitement est en outre configuré pour capturer au moins un paramètre de capacité client, et dans lequel le composant d'interface est configuré pour envoyer au moins un paramètre de capacité client avec la description de visualisation à au moins un serveur (1002) servant d'entrée pour l'adaptation des parties spatiales ($\Omega_0$, $\Omega_1$, $\Omega_2$) à une capacité correspondante du client (1001).

**13.** Ordinateur client selon la revendication 11 ou 12, comprenant en outre :

un composant de positionnement configuré pour recevoir (4500) des informations de changement de position ;
dans lequel le composant de traitement est en outre configuré pour :

prédire (4600) des informations de changement de position futures sur la base des informations de changement de position reçues ;
déterminer (4700) une description de visualisation supplémentaire correspondant aux informations de changement de position futures prédites ; et

pré-extraire (4800) au moins une série de couches d'images bidimensionnelles supplémentaire pour la description de visualisation supplémentaire en répétant les étapes d'envoi, de réception et de calcul pour la description de visualisation supplémentaire.

**14.** Ordinateur client selon l'une quelconque des revendications 11 à 13, dans lequel le composant de traitement est en outre configuré pour déterminer au moins un paramètre de partitionnement pour la scène tridimensionnelle.

**15.** Système informatique (1000) comprenant :

un ordinateur client (1001) configuré selon l'une quelconque des revendications 11 à 14 ;
et au moins un ordinateur serveur (1002) couplé de manière à communiquer avec l'ordinateur client (1001) configuré pour générer au moins une série de couches d'images bidimensionnelles ($d_0$, $d_1$, $d_2$) selon la description de visualisation.

1000

1002

1101

1001

| Server | | Client |

1102

FIG. 1

2000

6000

$x_3$

$x_2$

$\vartheta$

$x_1$

$\varphi$

$\chi$

FIG. 2

FIG. 3

FIG. 4

(a) Initial scene after phase 1

(b) Optimized scene after phase 2

FIG. 8

FIG. 5

FIG. 6

from 4400

4000

Receiving position change information — 4500

predicting future position change information — 4600

determining further visualization description — 4700

pre-fetching further series of image layers — 4800

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. NOGUERA et al.** Navigating large terrains using commodity mobile devices. *Computers and Geosciences,* September 2011
- **S. JESCHKE.** Layered Environment-Map Impostors for Arbitrary Scenes. *Graphics Interface Proceedings,* 2002

- **MÄNTYLÄ, M.** An introduction to solid modeling. Computer Science Pr, 1988
- **MOLNAR, S. ; COX, M. ; ELLSWORTH, D. ; FUCHS, H.** A sorting classification of parallel rendering. *IEEE Computer Graphics and Applications,* 1994, vol. 14, 23-32